# EUROPÄISCHE PATENTSCHRIFT

(11) **EP 3 558 083 B1**
(45) Veröffentlichungstag und Bekanntmachung des Hinweises auf die Patenterteilung: **28.02.2024**
(21) Anmeldenummer: 17822187.5
(22) Anmeldetag: 07.12.2017
(51) Int. Cl.: A47L 15/00, A47L 15/44, D06F 33/37, D06F 39/02

(54) **VERFAHREN ZUR DOSIERUNG VON REINIGUNGSMITTELN**
METHOD FOR METERING CLEANING AGENTS
PROCÉDÉ DE DOSAGE DE PRODUITS DE LAVAGE

(30) Priorität: 21.12.2016 DE 102016225833
(43) Veröffentlichungstag der Anmeldung: 30.10.2019
(73) Patentinhaber: Henkel AG & Co. KGaA, 40589 Düsseldorf (DE)
(72) Erfinder: KESSLER, Arnd, 40789 Monheim am Rhein (DE); WEBER, Thomas, 41541 Dormagen (DE); ZIPFEL, Johannes, 40593 Düsseldorf (DE); NITSCH, Christian, 40591 Düsseldorf (DE); ZÜCHNER, Lars, 40764 Langenfeld (DE); FRANKE, Nadine, 50668 Köln (DE); WAWER, Georg, 1040 Wien (AT); MÜLLER, Alexander, 40789 Monheim (DE); ARTH, Clemens, 8020 Graz (AT)
(86) Internationale Anmeldenummer: PCT/EP2017/081857
(87) Internationale Veröffentlichungsnummer: WO 2018/114363

(56) Entgegenhaltungen:
- EP-A1- 2 789 725
- DE-A1-102006 038 341
- DE-A1-102008 036 586
- DE-A1-102008 053 312
- DE-A1-102009 045 580
- KR-A- 20150 086 807
- US-A1- 2014 236 328

## Beschreibung

### Gebiet der Erfindung

Die Erfindung betrifft ein Verfahren zur automatischen Dosierung von Reinigungsmitteln in einer Reinigungsmaschine.

### Hintergrund der Erfindung

Ein bekanntes Problem bei der Reinigung mit Hilfe von Reinigungsmaschinen betrifft die Dosierung der verwendeten Reinigungsmittel, insbesondere im Hinblick auf den optimalen Zeitpunkt der Abgabe der Reinigungssubstanz und die optimale Menge. Hierbei führt sowohl eine zu niedrige, als auch eine zu hohe Dosierung von Reinigungsmitteln zu einem unbefriedigenden Reinigungsergebnis. Im Falle einer zu hohen Dosierung werden darüber hinaus unnötig viel Energie, Reinigungsmittel und Wasser verbraucht, wodurch sich nicht nur die Kosten erhöhen, sondern auch die Umwelt zusätzlich belastet wird.

Eine exakte Dosierung des Reinigungsmittels ist jedoch nicht trivial, da die richtige Dosierung nicht nur von der Menge und dem Verschmutzungsgrad der zu reinigenden Gegenstände, sondern auch von anderen Faktoren, wie dem ausgewählten Reinigungsprogramm, der Verschmutzungsart, der Wasserhärte, dem Reinigungsmittel sowie eventuellen Reinigungszusätzen und dergleichen abhängt.

Zur Lösung der genannten Probleme sind Reinigungsmaschinen mit automatischen Dosiersystemen bekannt, bei denen mit Hilfe von verschiedenen Sensoren ein aktueller Reinigungszustand von Reinigungsgut sowie ein aktueller Betriebszustand einer Reinigungsmaschine identifiziert werden und in Abhängigkeit der ermittelten Zustände, Reinigungsmittel dosiert an die Reinigungsmaschinen abgegeben wird, so dass ein einziger Reinigungsvorgang vorzugsweise eine Vielzahl von Dosiervorgängen umfasst.

Weil eine automatische Dosierung jedoch auch bei Reinigungsvorgängen mit älteren Reinigungsmaschinen erwünscht ist, die in der Regel eine Haltbarkeit von 15 - 20 Jahren aufweisen, wurde ein universell einsetzbares nachrüstbares System, insbesondere ein universell einsetzbares mobiles automatisches Dosiergerät vorgeschlagen, bei dem ebenfalls in Abhängigkeit ermittelter aktueller Reinigungszustände des Reinigungsguts sowie in Abhängigkeit ermittelter aktueller Betriebszustände der Reinigungsmaschinen, Reinigungsmittel dosiert an die Reinigungsmaschinen abgegeben wird.

Nachteilig an dem vorgeschlagenen mobilen automatischen Dosiergerät ist jedoch, dass dieses insbesondere bei der Gewährleistung der erwünschten universellen Einsetzbarkeit einen optimalen Zeitpunkt zur Dosierung von Reinigungsmittel während eines Reinigungsvorgangs - ausschließlich anhand von während eines Reinigungsvorgangs ermittelten Daten - nur ungenau bestimmen kann, was dazu führt, dass schließlich auch kein optimales Reinigungsergebnis erzielt werden kann. Insbesondere die exakte Bestimmung der aktuellen Betriebszustände einer Reinigungsmaschine ausschließlich anhand von während eines Reinigungsvorgangs ermittelten Daten ist hierbei problematisch.

Die Dokumente DE102008053312 A1 und DE102008036586 A1 beschreiben beispielhafte Tanks für Haushaltsgeräte, die spezielle Funktionalitäten aufweisen, welche eine bessere Dosierung von Reinigungsmitteln ermöglichen. Das Dokument DE102006038341 A1 beschreibt ein Dosiersystem und ein Verfahren zur kontrollierten Abgabe von Reinigungsmitteln auf der Grundlage von Informationen, die aus der Leistungsaufnahme des Haushaltsgeräts abgeleitet werden. Das Dokument DE102009045580 beschreibt eine Tür für eine Waschmaschine mit einer integrierten Abgabevorrichtung. Dokument EP2789725 A1 beschreibt ein Haushaltsgerät, das mit einer Anhängevorrichtung ausgestattet ist, die Modellinformationen über das Gerät speichert. Dokument US2014236328 A1 beschreibt ein System, das Geräte- und Reinigungsmittelinformationen empfangen kann, um ein Reinigungsprogramm zu bestimmen. Dokument KR20150086807 beschreibt eine Methode zum Generieren einer virtuellen Fernbedienung aus einem Bild einer Fernbedienung.

Vor diesem Hintergrund ist es somit Aufgabe, die beschriebenen Probleme zumindest teilweise zu verringern oder zu vermeiden, das heißt ein optimales Reinigungsergebnis unter geringem Energie - Wasser - und Reinigungsmittelverbrauch bei einer möglichst universellen Einsetzbarkeit des mobilen Dosiergeräts zu liefern. Diese Aufgabe wird gegenständlich durch ein Verfahren zur automatischen Dosierung von Reinigungsmitteln gemäß Anspruch 1 gelöst.

Es ist erkannt worden, dass ein optimaler Zeitpunkt zur Dosierung von Reinigungsmittel während eines Reinigungsvorgangs besonders exakt bestimmt werden kann, indem neben einem aktuellen Reinigungszustand von Reinigungsgut auch ein aktueller Betriebszustand einer Reinigungsmaschine bekannt ist.

Ferner ist erkannt worden, dass der Betriebszustand einer Reinigungsmaschine und damit bei Kenntnis eines aktuellen Reinigungszustands auch der optimale Zeitpunkt für eine Dosierung von Reinigungsmittel besonders exakt bestimmt werden kann, indem das Dosiergerät vor Beginn eines Reinigungsvorgangs Steuerinformationen betreffend die den Reinigungsvorgang durchführende Reinigungsmaschine erhält. Vor dem Hintergrund einer größtmöglichen Benutzerfreundlichkeit wird es insbesondere als vorteilhaft angesehen, wenn der Vorgang, der zum Empfang der Steuerinformation führt, weitestgehend automatisch erfolgt.

Gemäß einem ersten Aspekt wird daher ein Verfahren zur Dosierung von Reinigungsmitteln in Reinigungsmaschinen vorgeschlagen, umfassend die Schritte: Empfangen von Steuerinformationen, wobei die Steuerinformationen abhängig von einer Information zu einer Reinigungsmaschine sind; Ermitteln des Fortschritts eines Reinigungsvorgangs; Dosieren von Reinigungsmittel abhängig von den empfangenen Steuerinformationen und dem ermittelten Fortschritt des Reinigungsvorgangs; wobei die Information zu der Reinigungsmaschine über eine sensorbasierte automatische Erkennung ermittelbar ist.

Unter Reinigungsmitteln werden gegenständlich nicht nur Waschmittel, sondern insbesondere auch Weichspüler, Maschinenreiniger, Geschirrspülmittel, Wasserenthärter, Klarspüler, Stärke, Essigreiniger, Wasserabweiser, Farbfänger, Bleichmittel, Vergrauungsinhibitoren, Farbübertragungsinhibitoren sowie biologisch aktive Systeme und dergleichen verstanden.

Unter Reinigungsmaschinen können gegenständlich insbesondere Haushaltsmaschinen, wie Waschmaschinen, Spülmaschinen, Wäschetrockner, Wäschemangeln und dergleichen verstanden werden, es können aber auch Großküchengeräte bzw. Geräte aus Textilreinigungsbetrieben unter Reinigungsmaschinen verstanden werden.

Bei den gemäß dem gegenständlichen Verfahren zur Dosierung von Reinigungsmitteln in Reinigungsmaschinen an ein mobiles Dosiergerät übertragenen Steuerinformationen handelt es sich vorteilhafterweise um Steuerinformationen betreffend die Programmstruktur der den Reinigungsvorgang ausführenden Reinigungsmaschine, welche von dem Dosiergerät dazu genutzt werden können, einen Betriebszustand eines Reinigungsvorgangs in einer Reinigungsmaschine exakter bestimmen zu können, wodurch ein Zeitpunkt zur Dosierung von Reinigungsmittel auch exakter ermittelt werden kann, so dass ein möglichst optimales Reinigungsergebnis erzielt werden kann.

Vorteilhaftersweise umfassen die Steuerinformationen den vollständigen Programmablauf einer Reinigungsmaschine in allen mit der Reinigungsmaschine durchführbaren Reinigungsprogrammen. Als Programmablauf wird dabei die Abfolge sämtlicher während eines Programms ausführbarer Operationen verstanden, die in der Regel für jeden Reinigungsmaschinentypen individuell sind. Ein mobiles Dosiergerät zur Ausführung des gegenständlichen Verfahrens verfügt dabei vorzugsweise über eine Kommunikationseinheit umfassend eine Kommunikationsschnittstelle eingerichtet zum Empfang der Steuerinformation. Für einen flexiblen vorzugsweise auch aus der Ferne möglichen Empfang der Steuerinformation ist die Kommunikationsschnittstelle dabei vorteilhafterweise als Drahtloskommunikationsschnittstelle gebildet.

Die von dem Dosiergerät über die Kommunikationseinheit empfangenen Steuerinformationen sind vorzugsweise auf einem Speicher, insbesondere auf einem entfernt von dem Dosiergerät angeordneten externen Speicher hinterlegt. Vorzugsweise ist der externe Speicher Cloud-basiert und über eine Verbindung zur Cloud erreichbar. Vorteilhafterweise kann das Dosiergerät die Steuerinformationen auf diese Weise direkt von dem externen Speicher erhalten. Dies ermöglicht einen Cloud-basierten Umgang mit den gespeicherten Daten und somit neben einem einfachen Austausch von Informationen auch einen praktisch universellen Zugriff auf die Informationen.

Neben einem Empfang der auf einem externen Speicher gespeicherten Steuerinformationen über eine direkte Verbindung zu dem Speicher, können die Steuerinformationen auch indirekt, beispielsweise über einen Internetdienst übertragen und von dem Dosiergerät empfangen werden.

Alternativ oder kumulativ kann der Speicher auch als interner Speicher gebildet und an dem Dosiergerät angeordnet sein, vorzugsweise in das Dosiergerät integriert sein. Dies ermöglicht dann im Fall einer alternativen Anordnung zwar keinen Cloud-basierten Zugang zu den Daten, erfordert aber auch keine als Drahtlosschnittstelle gebildete Kommunikationsschnittstelle.

Gemäß einer weiteren Ausführungsform des gegenständlichen Verfahrens zur Dosierung von Reinigungsmitteln in Reinigungsmaschinen wird vorgeschlagen, dass die Steuerinformationen anstatt direkt von dem Speicher, über einen Nutzer, beispielsweise mit Hilfe eines Nutzerendgeräts wie einem Smart Phone, einem Tablet oder einem Computer drahtlos an das mobile Dosiergerät übertragen und von dem Dosiergerät empfangen werden.

Das Nutzerendgerät kann hierbei vorzugsweise über eine Applikation eine Verbindung zu dem Dosiergerät aufbauen und die Steuerinformationen drahtlos an das Dosiergerät senden.

Das Nutzerendgerät kann zudem ebenfalls drahtlos mit dem Speicher verbunden sein, um die anschließend an das Dosiergerät weitergeleiteten Steuerinformationen von dem Speicher zu erhalten bzw. von dem Speicher abzurufen.

Da die empfangenen Steuerinformationen gemäß dem gegenständlichen Verfahren abhängig von einer Information zu einer Reinigungsmaschine sind, muss der Speicher vor der Auswahl der entsprechenden Steuerinformationen zunächst eine entsprechende Information zu einer Reinigungsmaschine erhalten. Diese Information erhält der Speicher gemäß dem gegenständlichen Verfahren vorzugsweise über eine sensorbasierte automatische Erkennung.

Bei der Information zu einer Reinigungsmaschine handelt es sich um eine gerätespezifische Information, vorzugsweise um eine die Reinigungsmaschine eindeutig definierende Information, insbesondere um eine Seriennummer.

Alternativ oder kumulativ kann es sich bei der Information auch um eine Produktnummer, Typennummer, Modellnummer, Servicenummer, Gestellnummer und/oder dergleichen handeln, mit deren Hilfe die Reinigungsmaschine eindeutig identifiziert werden kann.

Gemäß einer weiteren möglichen Ausführungsform kann es sich bei der Information zu einer Reinigungsmaschine auch um eine aus einem oder mehreren gerätespezifischen Kennzeichen zusammengesetzte Information handeln, welche die Reinigungsmaschine schließlich eindeutig identifiziert. Als gerätespezifische Kennzeichen können dabei unter anderem beispielsweise die Art und/oder die Marke und/oder das Baujahr und/oder die Baureihe und/oder das Fassungsvermögen und/oder die Ladekapazität und/oder die Energieklassifizierung und/oder die Befüllweise der Reinigungsmaschine verwendet werden.

Die eine Reinigungsmaschine vorzugsweise eindeutig definierende Information wird gemäß dem gegenständlichen Verfahren über eine sensorbasierte automatische Erkennung erhalten.

Gemäß einer Ausführungsform des gegenständlichen Verfahrens wird vorgeschlagen, dass die sensorbasierte automatische Erkennung der Information zu der Reinigungsmaschine hierbei auf Basis eines Sensors zur Erfassung eines Bildes erfolgt. Als Bildsensoren können vorzugsweise halbleiterbasierte Bildsensoren verwendet werden, insbesondere CCD- bzw. CMOS-Sensoren.

In Übereinstimmung mit einer Verwendung eines Sensors zur Erfassung einer Bildinformation handelt es sich bei der Information zu der Reinigungsmaschine gemäß dem gegenständlichen Verfahren um ein Bild. Vorteilhafterweise kann es sich hierbei um nicht nur eine Bildinformation bzw. um ein Bild, sondern auch um mehrere Bildinformation bzw. Bilder handeln, die zumindest einen Teil einer Reinigungsmaschine umfassen.

Gemäß einem Ausführungsbeispiel des gegenständlichen Verfahrens werden die Bildinformationen bzw. die Bilder von einem in einem Nutzerendgerät angeordneten Sensor optisch erfasst. Der optische Sensor kann hierbei der Sensor einer Kamera eines Smart Phones, eines Tablets oder einer Smart Cam und dergleichen sein, der eine Bildinformation bzw. ein Bild von zumindest einem Teil einer Reinigungsmaschine umfasst. Die Bildinformationen bzw. die Bilder umfassen für eine Reinigungsmaschine spezifische Teile, wie ein Logo und/oder eine Marke und/oder ein Typenschild und/oder die Dosierkammer und/oder dergleichen, so dass anhand dieser Informationen die Information zu der Reinigungsmaschine ermittelt werden kann.

Gemäß einer weiteren vorteilhaften Ausführungsform des gegenständlichen Verfahrens wird vorgeschlagen, dass die sensorbasierte automatische Erkennung die Bestimmung von Bildobjekten innerhalb eines erfassten Bildes umfasst. Hierzu kann ein Bild in Schritten bestimmter definierter Größe abgetastet werden, wobei ein Abtasten des Bildes vorzugsweise in horizontaler, vertikaler und diagonaler Richtung erfolgt und Bildobjekte beispielsweise entsprechend anhand vorgegebener Kontraste ermittelt werden können.

In einem vorzugsweise auf einen Schritt der Erkennung von Bildobjekten folgenden Schritt kann dabei vorzugsweise eine Reduktion der bestimmten Bildobjekte erfolgen, wobei die Reduktion der Bildobjekte vorzugsweise anhand ihrer Aussagekraft für die Ermittlung der Information zu der Reinigungsmaschine erfolgt. Hierbei sollen die Bildobjekte nach einer bereits erfolgten Auswahl vorzugsweise so weit reduziert werden, dass trotzdem noch eine vielversprechende Ermittlung der Information zu der Reinigungsmaschine möglich ist. Dies ermöglicht nicht nur eine Reduktion von Speicherkapazität der zu speichernden Information, sondern in der Regel auch einen schnelleren Informationsaustausch und somit eine schnellere Ermittlung der eine Reinigungsmaschine vorzugsweise eindeutig definierenden Information.

Vorzugsweise wird gemäß einer weiteren vorteilhaften Ausführungsform des gegenständlichen Verfahrens vorgeschlagen, dass die sensorbasierte automatische Erkennung einen Algorithmus zur Texterkennung verwendet, wobei eine Ermittlung einer Information zu einer Reinigungsmaschine vorzugsweise anhand eines innerhalb der erfassten Bildinformation angeordneten erkannten Textes erfolgt. Dies ist insbesondere dann von Vorteil, wenn die Bildinformationen bzw. die Bilder einen über ein Minimum hinausgehenden Anteil an Text erhalten. So würde eine Texterkennung bei einem Logo in der Regel nicht notwendig sein, bei einem Typenschild einer Reinigungsmaschine hingegen schon. Vorteilhafterweise kann die Texterkennung hierbei über einen Vergleich mit Wörterbüchern oder dergleichen erweitert werden, was eine verlässlichere Erkennung von Textbausteinen ermöglicht. Auch kann beispielweise ein eigenes Wörterbuch bzw. eine Liste mit Begriffen implementiert werden, das vorzugsweise gängige Herstellernamen, bzw. gängige Herstellerangaben enthält.

Um eine aussagekräftige Ermittlung der Information zu der Reinigungsmaschine anhand von Bildinformationen bzw. von Bildern zu erhalten, wird gegenständlich vorgeschlagen, dass die sensorbasierte automatische Erkennung auch eine optische Bearbeitung der erfassten Bildinformation umfasst, wobei die optische Bearbeitung vorzugsweise vor einer Bestimmung von Bildobjekten innerhalb der erfassten Bildinformation erfolgt.

Eine optische Bearbeitung der erfassten Bildinformationen bzw. des erfassten Bildes kann beispielsweise eine Überführung der Farbwerte eines Bildes in Grauwerte bzw. eine Binärisierung des Bildes in Schwarz-Weiß-Werte umfassen. Des Weiteren kann eine optische Bearbeitung auch eine Transformation der Bilder umfassen, beispielsweise eine Transformation in digitale Daten, beispielsweise RGB-Daten. Ferner kann im Rahmen einer optischen Bearbeitung auch eine Filterung oder Gruppierung von Bildobjekten anhand der Helligkeit bzw. der Größe erfolgen.

Gemäß einer weiteren vorteilhaften Ausführungsform des gegenständlichen Verfahrens wird vorgeschlagen, dass die erfassten Bildinformationen bzw. Bilder mit einem oder mehreren der oben genannten Algorithmen auch lokal an dem Nutzerendgerät verarbeitet und mit einer vorzugsweise ebenfalls an dem Nutzerendgerät vorhandenen Datenbank abgeglichen werden können, um die eine Reinigungsmaschine vorzugsweise eindeutig definierende Information zu ermitteln. Nach Identifizierung der Information zu der Reinigungsmaschine kann anhand dieser die Steuerinformation ermittelt werden, welche zur anschließenden Parametrisierung des beweglichen Dosiergeräts verwendet wird.

In einer alternativen Ausführungsform des gegenständlichen Verfahrens werden die aufgenommenen
Bildinformationen mit Hilfe eines Nutzerendgeräts über eine Kommunikationsschnittstelle in die Cloud übertragen, wo die erfassten Bildinformationen bzw. Bilder mit einem oder mehreren der oben genannten Algorithmen in der Cloud verarbeitet werden, bevor die Informationen schließlich mit einer in der Cloud vorhandenen Datenbank abgeglichen werden, um die eine Reinigungsmaschine vorzugsweise eindeutig definierende Information zu ermitteln.

Gemäß einer weiteren alternativen Ausführungsform des gegenständlichen Verfahrens wird vorgeschlagen, dass in dem Fall, dass mehrere verschiedene mögliche Ergebnisse der Identifizierung einer eine Reinigungsmaschine vorzugsweise eindeutig definierenden Information ermittelt wurden, das Ergebnis in der Cloud an das Nutzerendgerät zurückübertragen wird und einem Nutzer ermöglicht wird, die passende Information aus der Liste auszuwählen, um das bewegliche Dosiergerät nach einer Ermittlung der Steuerinformation zu parametrisieren.

In dem Fall, dass während einer Verarbeitungsprozedur gar keine passende Information ermittelt werden kann, kann der Nutzer vorzugsweise eine erneute Erfassung der Bildinformationen bzw. der Bilder vornehmen und die Verarbeitungsprozedur bis zur Identifikation einer eindeutigen Information zu einer Reinigungsmaschine wiederholen.

Eine gemäß dem gegenständlichen Verfahren erfolgende Dosierung von Reinigungsmittel erfolgt nicht nur abhängig von der Information zu der Reinigungsmaschine bzw. der über diese Information ermittelten empfangenen Steuerinformationen, sondern auch anhand von dem ermittelten Fortschritt des Reinigungsvorgangs.

Eine Ermittlung des Fortschritts des Reinigungsvorgangs erfolgt hierbei vorzugsweise über die Erfassung von Messwerten durch Sensoren, die insbesondere in einer Sensoreinheit zusammengefasst und an dem Dosiergerät angeordnet sind. Bei den in die Sensoreinheit des Dosiergeräts integrierten Sensoren kann es sich um verschiedenste Arten von Sensoren handeln die vorzugsweise verschiedene Messgrößen erfassen können, so dass ein aktueller Reinigungszustand von Reinigungsgut möglichst exakt bestimmt werden kann.

So können beispielsweise Sensoren zur Erfassung von Messgrößen einer Reinigungslauge sowie Sensoren zur Messung geometrischer, mechanischer, dynamischer, thermischer oder kalorischer Messgrößen oder auch Sensoren zur Messung von klimatischen, optischen, akustischen, elektrischen chemischen, biologischen oder medizinischen Messgrößen angeordnet sein.

Die von den Sensoren der Sensoreinheit erfassten und verarbeiteten Messwerte werden vorzugsweise unmittelbar an die Steuereinheit weitergeleitet, wo die Daten aufbereitet werden.

Die verarbeiteten und aufbereiteten Messwerte können dem Nutzer vorzugsweise gemeinsam mit über die Kommunikationseinheit zusätzlich zugänglichen für den Reinigungsvorgang relevanten Daten zur Verfügung gestellt werden, um darauf basierend Werbung, Vorschläge, Warnungen oder andersartige Botschaften zum Einsatz oder zur Planung des Reinigungsvorgangs zu übermitteln und um dadurch eine optimierte Reinigung durchführen zu können.

Unter einer optimierten Reinigung wird hierbei gegenständlich eine energietechnisch, reinigungstechnisch, lärmtechnisch oder beliebig andersartig optimierte Reinigung verstanden.

In einer möglichen Ausführung des gegenständlichen Verfahrens in der die Kommunikationseinheit des beweglichen Dosiergeräts über eine Schnittstelle mit einer Cloud verbunden ist, wird vorgeschlagen, dass über die Kommunikationseinheit des mobilen Dosiergeräts Nachrichten an definierte Adressen versendet werden, beispielsweise per SMS, E-Mail, Skype oder einen Internet basierenden Nachrichtendienst, um einen Benutzer über den Fortschritt, Abbruch, Abschluss, Start oder anderen Status eines Reinigungsvorgangs zu informieren.

In einer alternativen Ausführung des gegenständlichen Verfahrens, in der die Kommunikationseinheit des beweglichen Dosiergeräts über eine Schnittstelle mit einem Webservice oder einer Applikation auf einem Nutzerendgerät verbunden ist und Informationen über einen Behandlungs-, Reinigungs- oder Säuberungsvorgang an diese Instanz übermittelt, kann ein Nutzer dazu befähigt sein, eine weitere Aktion zu veranlassen, eine laufende Aktion abzubrechen oder zu verändern oder eine Konfiguration des beweglichen Dosiergeräts vornehmen.

In einer typischen Umsetzung zur Verarbeitung der von der Sensoreinheit erfassten Messwerte können die Sensorinformationen gesammelt und für die weitere Verwendung aufbereitet werden, wobei das Dosiergerät dann vorzugsweise über einen nicht-temporären Speicher verfügt, um die über die Zeit aufgenommenen Sensorinformationen abzulegen und eine Entscheidungsfindung über den geeigneten Zeitpunkt und die Zugabe geeigneter unterschiedlicher Substanzen selbsttätig durchzuführen sowie bei Fehlen entsprechender Entscheidungskriterien oder externer weiterführender Einflüsse auf die Entscheidungsfindung einen vorab definierten Ablauf der Zugabe von Substanzen umzusetzen und eine auf die Gegebenheiten optimierte Reinigung oder Behandlung durchzuführen.

Eine Aufbereitung der Sensorinformationen kann gegenständlich auch dazu verwendet werden, die eine Reinigungsmaschine vorzugsweise eindeutig definierende Information automatisch zu ermitteln, indem das bewegliche Dosiergerät vorzugsweise über eine drahtlose Verbindung über ein Nutzerendgerät indirekt oder über ein integriertes Modem direkt mit einer Datenbank, einer Internetseite oder einem Dienst in einer Cloud verbunden ist und über einen Datenabgleich zwischen den von dem beweglichen Dosiergerät aufbereiteten Daten und den in der Cloud gespeicherten Daten eine Ermittlung der die Reinigungsmaschine vorzugsweise eindeutig definierende Information durchführt, so dass eine auf die Gegebenheiten optimierte Reinigung durchführbar ist.

Neben der Ermittlung einer eine Reinigungsmaschine vorzugsweise eindeutig definierende Information anhand einer Aufbereitung der Sensorinformationen, kann über einen ständigen Abgleich der aufbereiteten Sensorinformationen mit den von einer Datenbank, einer Internetseite oder einem Dienst in der Cloud zur Verfügung gestellten Informationen auch ein iterativer auf den individuellen Waschgang bezogener Prozess zur Anpassung und zur Entscheidungsfindung eines geeigneten Dosierzeitpunkts durchgeführt werden.

Gemäß einer weiteren Ausführungsform des gegenständlichen Verfahrens kann eine Entscheidungsfindung eines geeigneten Dosierzeitpunkts auch über die Einbeziehung von Nutzererfahrungswerten erfolgen, indem der Nutzer vorzugsweise über ein Nutzerendgerät eine manuelle Parametrisierung eines Reinigungsvorgangs vornehmen kann.

Gemäß einer weiteren Ausführungsform zur Verbesserung des gegenständlichen Verfahrens wird vorgeschlagen, dass anhand der während eines Reinigungsvorgangs erfassten Messgrößen und der empfangenen Steuerinformationen ein Nutzerprofil erstellt wird, das vorzugsweise auf einem an dem Dosiergerät angeordneten nicht flüchtigen Speicher gespeichert wird.

Gemäß einer weiteren Ausführungsform des gegenständlichen Verfahrens wird vorgeschlagen, dass das Dosiergerät über einen vollständig autonomen, selbstlernenden Algorithmus verfügt, welcher über die Zeit sowohl die von dem Dosiergerät aufbereiteten, auf den individuellen Waschvorgang bezogenen Informationen, als auch die zusätzlich von einem Speicher zugänglichen oder in einem Nutzerprofil gespeicherten Informationen verwendet, um eine Entscheidungsfindung über den geeigneten Zeitpunkt und die Zugabe geeigneter unterschiedlicher Reinigungssubstanzen zu erlernen, um eine auf die Gegebenheiten energietechnisch, reinigungstechnisch, lärmtechnisch oder beliebig andersartig optimierte Reinigung durchzuführen.

Gemäß einem zweiten Aspekt nicht Teil der der Erfindung wird ein mobiles Dosiergerät zur automatischen Dosierung von Reinigungsmitteln in einer Reinigungsmaschine vorgeschlagen, umfassend: zumindest eine Dosierkammer; zumindest eine Sensoreinheit, eingerichtet zur Erfassung von Messgrößen; zumindest eine Steuereinheit, eingerichtet zur Steuerung des mobilen Dosiergeräts; zumindest eine Kommunikationseinheit, eingerichtet zum Empfangen einer Steuerinformation, wobei die Steuerinformation abhängig von einer über eine sensorbasierte automatische Erkennung ermittelbaren Information zu der Reinigungsmaschine ist; wobei das Dosiergerät derart eingerichtet ist, dass eine dosierte Zuführung von Reinigungsmittel in Abhängigkeit von den empfangenen Steuerinformationen und dem ermittelten Fortschritt des Reinigungsvorgangs erfolgt. Die Sensoreinheit des mobilen Dosiergeräts umfasst vorzugsweise eine Reihe von verschiedenen Sensoren, die in der Lage sind, insbesondere einen aktuellen Reinigungszustand von Reinigungsgut während eines Reinigungsvorgangs besonders exakt bestimmen zu können, so dass unter anderem auf dieser Grundlage eine optimale Dosierung von Reinigungsmittel vorgenommen werden kann.

Dazu sollte die Sensoreinheit vorzugsweise zumindest einen Sensor zur Erfassung des Zustands einer Reinigungslauge, insbesondere zumindest einen Sensor zur Messung der Viskosität, der Trübung, der Pollenbelastung, der Wasserhärte, der Farbausspülung, des pH-Werts, oder des Geruchs aufweisen.

Zusätzlich wird zur Gewährleistung der Bestimmung einer optimalen Dosierung von Reinigungsmittel vorgeschlagen, dass zumindest ein Sensor zur Messung einer der folgenden Messgrößen an dem Dosiergerät und/oder der Reinigungsmaschine angeordnet ist: geometrische Messgrößen; mechanische Messgrößen; dynamische Messgrößen; thermische und kalorische Messgrößen; klimatische Messgrößen; optische Messgrößen; akustische Messgrößen; elektrische Messgrößen; chemische, biologische oder medizinische Messgrößen.

Zusätzlich kann es für eine möglichst exakte Bestimmung eines Verschmutzungszustands von Reinigungsgut vorteilhaft sein, wenn die Sensoreinheit zumindest eine Mini- oder Mikrokamera zur Erfassung eines Zustands eines Reinigungsguts aufweist.

Die Steuereinheit des gegenständlichen Dosiergeräts ist vorzugsweise dazu eingerichtet die Dosierung des Dosiergerätes anhand der von der Sensoreinheit ermittelten Messwerte sowie anhand der erhaltenen Steuerinformation zu steuern. Zusätzlich ist die Steuereinheit auch in der Lage die Dosierung von Reinigungsmittel von anderen Informationen, wie von Nutzererfahrungswerten und Nutzerprofilen und dergleichen abhängig zu machen, wobei die Steuereinheit eine Dosierung von Reinigungsmittel insbesondere nach einer erfolgten Kommunikation mit der Kommunikationseinheit vornimmt.

Gemäß einer bevorzugten Ausführung ist die Kommunikationseinheit des gegenständlichen Dosiergeräts als eine Drahtloskommunikationseinheit gebildet, eingerichtet zur drahtlosen Kommunikation, insbesondere über WLAN, Bluetooth, Zigbee, NFC, Wibree, WiMAX, Measurable Networks, IrDA oder optischen Richtfunk. Vorteilhafterweise kann das mobile Dosiergerät somit trotz seiner Anordnung innerhalb einer Reinigungsmaschine mit einem Nutzer, einem Speicher, einem Cloud-basierten Dienst und dergleichen in Kontakt stehen.

Neben der Möglichkeit einer drahtlosen Kommunikation des Dosiergeräts mit einem Nutzer, einem Speicher, einem Cloud-basierten Dienst und dergleichen bietet die Drahtloskommunikationseinheit auch die Möglichkeit einer drahtlosen Kommunikation des Dosiergeräts mit anderen Reinigungsmaschinen innerhalb eines privaten oder öffentlichen Netzwerks.

Für eine optimale Dosierung wird gegenständlich vorgeschlagen, dass das mobile Dosiergerät vorzugsweise mehrere Dosierkammern aufweist, die insbesondere als bauliche Einheit gebildet sind. Die Dosierkammern können vor einem Reinigungsvorgang vorzugsweise über separate Nachfüllöffnungen mit dem gewünschten Reinigungsmittel befüllt werden. Die Nachfüllöffnungen sind vorzugsweise so groß, dass über diese sowohl einfach befüllt werden kann, als auch ein eventueller Spülvorgang vorgenommen werden kann. Dadurch, dass das Dosiergerät einfach gesäubert werden kann, kann ein und dieselbe Dosierkammer nach Spülung mit verschiedenen Reinigungsmitteln befüllt werden. Dies erlaubt insbesondere einen Einsatz eines das Dosiergeräts in verschiedenen Reinigungsmaschinen.

Um eine optimale Dosierung zu gewährleisten, wird zudem vorgeschlagen, dass das mobile Dosiergerät, insbesondere die Zuführeinheit des Dosiergeräts zumindest ein elektrisches Ventil sowie die dazugehörige Steuerelektronik aufweist. Vorzugsweise weist das mobile Dosiergerät ein Dosierventil für jede Dosierkammer auf. Hierbei handelt es sich insbesondere um elektrisch gesteuerte Ventile. Alternativ können die Ventile auch pneumatisch oder magnetisch gesteuert sein.

Zur notwendigen Energieversorgung wird ferner vorgeschlagen, dass das mobile Dosiergerät ein autarkes Energieumwandlungssystem aufweist. Alternativ kann auch ein anderes Energieumwandlungssystem an mobilen Dosiergerät angeordnet sein, das beispielsweise Bewegungsenergie oder Wärmeenergie in elektrische Energie umwandelt. Zudem wird vorgeschlagen, dass alternativ oder kumulativ zu einem autarken Energieumwandlungssystem eine mobile Energieversorgungseinheit an dem mobilen Dosiergerät angeordnet ist, insbesondere in Form von Batterien oder Akkumulatoren, so dass die Versorgung des mobilen Dosiergeräts mit elektrischer Energie jederzeit gewährleistet ist.

Alternativ kann das mobile Dosiergerät auch eine Einrichtung zur induktiven und berührungslosen Übertragung elektrischer Energie aufweisen, so dass das mobile Dosiergerät berührungslos per Induktion elektrisch gespeist werden kann. Daher wird vorgeschlagen, dass das mobile Dosiergerät zumindest eine Spule aufweist, in der über ein magnetisches und/oder elektrisches Feld ein Strom induziert werden kann.

Um die jeweiligen Füllstände der Reinigungsmittel in vorzugsweise jeder Dosierkammer bestimmen zu können, wird darüber hinaus vorgeschlagen, dass das mobile Dosiergerät vorzugsweise in jeder Dosierkammer eine Messeinrichtung zur Messung eines Füllstands, insbesondere eines absoluten Füllstands aufweist. Um einen fortwährenden Überblick über die Füllstände der Reinigungsmittel zu erlangen kann die Messung des Füllstands vorzugsweise kontinuierlich erfolgen, insbesondere über eine mechanische, eine kapazitive oder eine optische Messmethode. Alternativ kann eine Füllstandsmessung auch über ein Leitfähigkeits, Ultraschall- oder ein Mikrowellenverfahren erfolgen.

In einer energiesparenden Alternative zur kontinuierlichen Messung der Füllstände kann der Füllstand der Dosierkammern auch nur in bestimmten Intervallen oder erst ab bestimmten Grenzen mittels Füllstandsgrenzschaltern bestimmt werden.

Um die gemessenen Füllstände der Reinigungsmittel anzeigen zu können bzw. um ggf. warnen zu können, wenn niedrige Füllstände erreicht werden, wird vorgeschlagen, dass das mobile Dosiergerät dazu geeignet ist, eine Benachrichtigung über aktuelle Füllstände zu versenden.

Neben aktuellen Füllständen kann das mobile Dosiergerät vorzugsweise auch Informationen über etwaige Fehler in einer Spül - oder Waschkammer, wie Verkokungen von Kontakten, Verklemmen von Ventilen oder Entladungen von Batterien, weitergeben.

Gemäß einer weiteren Ausführung wird ferner ein Computerprogramm beschrieben, das Programmanweisungen umfasst, die einen Prozessor zur Ausführung und/oder Steuerung eines gegenständlichen Verfahrens veranlassen, wenn das Computerprogramm auf dem Prozessor läuft.

Zudem wird ein beispielhaftes computerlesbares Speichermedium beschrieben, welches ein beispielhaftes Computerprogramm enthält.

Es wird gemäß einem dritten Aspekt ferner ein beispielhaftes System beschrieben, umfassend das mobile Dosiergerät, ein Nutzerendgerät sowie einen Speicher, welche zusammen dazu eingerichtet sind, ein beispielhaftes gegenständliches Verfahren durchzuführen.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekte offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

In der Zeichnung zeigt
- Fig. 1: ein mobiles Dosiergerät, das nicht Teil der Erfindung ist, zur automatischen Dosierung von Reinigungsmitteln, angeordnet in dem Behandlungsraum eines Geschirrspülers;
- Fig. 2: das mobile Dosiergerät aus Fig. 1 in einer vergrößerten Ansicht;
- Fig. 3a: ein erstes Ausführungsbeispiel eines mobilen Dosiergeräts, das nicht Teil der Erfindung ist, zur automatischen Dosierung von Reinigungsmitteln angeordnet in der Waschtrommel einer Waschmaschine und für einen Empfang von Steuerinformationen drahtlos mit einem Nutzerendgerät verbunden;
- Fig. 3b: ein zweites Ausführungsbeispiel eines mobilen Dosiergeräts, das nicht Teil der Erfindung ist, zur automatischen Dosierung von Reinigungsmitteln angeordnet in der Waschtrommel einer Waschmaschine und für einen Empfang von Steuerinformationen drahtlos mit einem Nutzerendgerät verbunden;
- Fig. 3c: ein drittes Ausführungsbeispiel eines mobilen Dosiergeräts, das nicht Teil der Erfindung ist, zur automatischen Dosierung von Reinigungsmitteln angeordnet in der Waschtrommel einer Waschmaschine und für einen Empfang von Steuerinformationen drahtlos mit einem Nutzerendgerät verbunden;
- Fig. 3d: ein viertes Ausführungsbeispiel eines mobilen Dosiergeräts, das nicht Teil der Erfindung ist, zur automatischen Dosierung von Reinigungsmitteln angeordnet in der Waschtrommel einer Waschmaschine und für einen Empfang von Steuerinformationen drahtlos mit einem Nutzerendgerät verbunden;
- Fig. 4a: ein Ablaufdiagramm zur Veranschaulichung eines beispielhaften Vorgangs zum Empfang von Steuerinformationen gemäß einem ersten Ausführungsbeispiel;
- Fig. 4b: ein Ablaufdiagramm zur Veranschaulichung eines beispielhaften Vorgangs zum Empfang von Steuerinformationen gemäß einem zweiten Ausführungsbeispiel;
- Fig. 5: ein Beispiel einer gemäß Fig. 4b in Schritt 44 an ein Nutzerendgerät übermittelten Tabelle zur Auswahl einer Reinigungsmaschine;
- Fig. 6: Fließdiagramm zur Veranschaulichung eines beispielhaften Ablaufs einer sensorbasierten automatischen Erkennung, ab der Erfassung einer Bildinformation, bis hin zur Auswahl einer Steuerinformation;

Detaillierte Beschreibung einiger beispielhafter Ausführungsformen der Erfindung

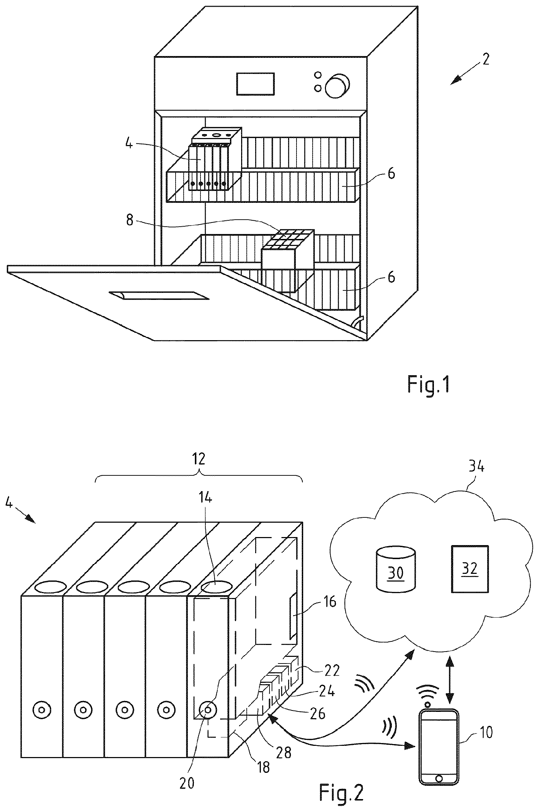

Fig. 1 zeigt ein mobiles Dosiergerät 4 zur automatischen Dosierung von Reinigungsmitteln gemäß einem ersten Ausführungsbeispiel, das nicht Teil der Erfindung ist, angeordnet in dem Behandlungsraum eines Geschirrspülers 2. Bei einer Anordnung des Dosiergeräts 4 innerhalb eines Geschirrspülers 2 sollte das Gerät vorzugsweise robust gegenüber den während der jeweiligen Reinigungsvorgänge einwirkenden mechanischen und chemischen Einflüssen ausgeführt sein. Das gemäß Fig. 1 in einem der Körbe 6 des Geschirrspülers 2 angeordnete Dosiergerät 4 verfügt vorzugsweise über eine eingebaute autarke Stromversorgung 26 und kann alternativ auch in dem Besteckkorb 8 oder in einer anderen Ausführung auch in einer Besteckschublade bzw. in oder an einem Vorratsbehälter für Reinigungsmittel des Geschirrspülers 2 angeordnet sein.

Fig. 2 zeigt das mobile Dosiergerät aus Fig. 1 in einer vergrößerten Ansicht, bei dem die verschiedenen Dosierkammern 12 in einer baulichen Einheit gebildet sind. Die Dosierkammern 12 weisen eigene Nachfüllöffnungen 14 sowie jeweils einen eigenen Füllstandssensor 16 auf. Das Innere einer jeden Dosierkammer 12 ist jeweils über eine Steuerleitung 18 mit einem elektrischen Ventil 20 verbunden. Es versteht sich, dass die Dosierkammern 12 auch mit der entsprechenden - hier nicht explizit dargestellten - Steuerelektronik ausgestattet sein müssen, um eine entsprechende Dosierung der Reinigungsmittel gewährleisten zu können. Ferner ist das Dosiergerät 4 mit einer Kommunikationseinheit 28 umfassend eine Kommunikationsschnittstelle ausgestattet, um die notwendige Kommunikation mit übrigen Komponenten des Dosiergeräts 4, wie beispielsweise der Steuereinheit 22, insbesondere betreffend die Füllstände der Reinigungsmittel sowie den Empfang der Dosierungsanweisungen führen zu können.

Neben der Möglichkeit einer Kommunikation mit den internen Komponenten des Dosiergeräts 4, ist das Dosiergerät 4 über eine vorzugsweise als Drahtloskommunikationsschnittstelle gebildete Schnittstelle der Kommunikationseinheit 28 auch zur Kommunikation mit einem Nutzer 40 befähigt. Ein Nutzer 40 kann mit dem Dosiergerät 4 beispielsweise mittels eines Nutzerendgeräts 10 vorzugsweise mittels eines Computers, Tablets oder Smart Phones kommunizieren. Eine Verbindung kann dabei beispielsweise per Bluetooth, WLAN, oder auch per Mobilfunk hergestellt werden. Neben einer Kommunikation mit einem Nutzer 40, erlaubt die vorzugsweise als Drahtlosschnittstelle gebildete Kommunikationsschnittstelle auch eine Kommunikation des Dosiergeräts 4 mit einem extern angeordneten Speicher 30, der vorzugsweise über eine Verbindung mit einer Cloud 34 erreichbar ist. Dabei kann eine Kommunikation mit dem extern angeordneten Speicher 30 entweder direkt oder indirekt über ein Nutzerendgerät 10 erfolgen.

Neben einer indirekten Verbindung mit der Cloud 34 über ein Nutzerendgerät 10 kann eine Verbindung zu der Cloud auch indirekt über einen Internetdienst 32 erfolgen.

Alternativ oder in Kombination zur Speicherung von Daten auf einem externen Speicher 30 kann auch ein interner Speicher in dem Dosiergerät 4 vorhanden sein, auf dem eine Datenspeicherung erfolgen kann. Das Dosiergerät 4 verfügt neben einer Kommunikationseinheit 28 und einer Steuereinheit 22 ferner über einer Sensoreinheit 24 zur Erfassung von Messgrößen sowie über eine autonome Stromversorgung 26 in Form von austauschbaren Batterien oder in Form eines autarken Energieumwandlungssystems. Alternativ kann das Dosiergerät 4 auch über die Stromversorgung des Geschirrspülers 2 mit Strom versorgt werden.

Das Dosiergerät 4 gemäß Fig. 2 weist insgesamt fünf Dosierkammern 12 auf, es versteht sich jedoch von selbst, dass ebenso auch mehr oder weniger Dosierkammern 12 angeordnet sein können, die ebenso auch nicht in baulicher Einheit gebildet sein müssen. Das dargestellte Dosiergerät 4 eignet sich neben der Dosierung von Spülmittel ebenso für eine optimierte Einbringung unterschiedlicher Substanzen, wie z.B. Klarspüler, Wasserenthärter, Spülmaschinensalz in vorzugsweise flüssiger Form oder Spülmaschinenreiniger und dergleichen. Die einzelnen Substanzen werden dann vorzugsweise in die unterschiedlichen Dosierkammern 12 des Dosiergeräts 4 eingefüllt. Durch die elektrischen Ventile 20 wird dann bei Bedarf die jeweilige Substanz in der jeweils von der Steuereinheit 22 bestimmten Menge in den Behandlungsraum eingebracht. Jede Dosierkammer 12 verfügt über Füllstandsensoren 16, welche den Zustand und die verfügbare Menge der jeweiligen Substanz messen und an die Steuereinheit 22 weiterleiten, die bei Bedarf einen Hinweis an den Nutzer 40 zum Nachfüllen oder Nachbestellen gibt.

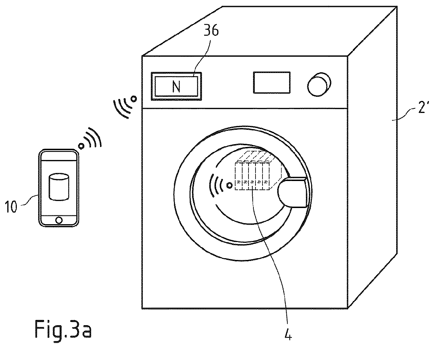

Fig. 3a zeigt ein erstes Ausführungsbeispiel eines mobilen Dosiergeräts, das nicht Teil der Erfindung ist, zur automatischen Dosierung von Reinigungsmitteln angeordnet in der Waschtrommel einer Waschmaschine 2' und für einen Empfang von Steuerinformationen drahtlos mit einem Nutzerendgerät 10 verbunden. Gemäß dem in Fig. 3a gezeigten Ausführungsbeispiel verfügt sowohl das als Smart Phone gebildete Nutzerendgerät 10, als auch die als Waschmaschine 2` gebildete Reinigungsmaschine über eine NFC-Schnittstelle, so dass die beiden mit einer NFC-Schnittstelle ausgestatteten Geräte, sofern sie sich in unmittelbarer Nähe befinden, zu einem kontaktlosen Austausch von Daten befähigt sind. Gemäß dem in Fig. 3a gezeigten Ausführungsbeispiel sind nun die eine Reinigungsmaschine vorzugsweise eindeutig definierende Information oder die Steuerinformationen der Maschine selbst auf einem in der Waschmaschine 2' angeordneten Speicher abgelegt, die bei einer Annäherung des mit einer NFC-Schnittstelle ausgestatteten Nutzerendgeräts 10 an dieses übertragen werden.

Über eine Applikation kann das Nutzerendgerät 10 beispielweise zum Abgleich der Daten der Reinigungsmaschine oder zum Abrufen der entsprechenden Steuerinformation auf eine Datenbank zugreifen, bevor die Informationen schließlich von dem Nutzerendgerät 10 über eine drahtlose Schnittstelle beispielsweise per WLAN, Zigbee oder Bluetooth an das bewegliche Dosiergerät 4 weitergegeben werden.

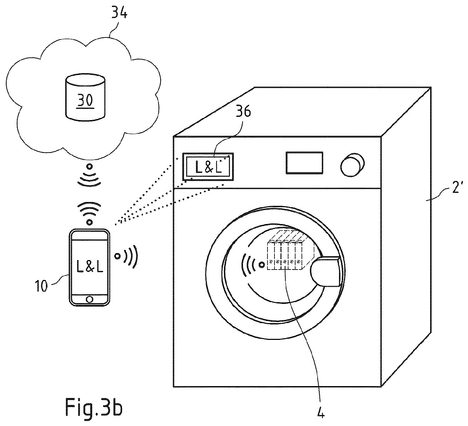

Fig. 3b zeigt ein zweites Ausführungsbeispiel eines mobilen Dosiergeräts 4, das nicht Teil der Erfindung ist, zur automatischen Dosierung von Reinigungsmitteln angeordnet in der Waschtrommel einer Waschmaschine 2' und für einen Empfang von Steuerinformationen drahtlos mit einem Nutzerendgerät verbunden. Gemäß dem in Fig. 3b gezeigten Ausführungsbeispiel verfügt das als Smart Phone gebildete Nutzerendgerät 10 über einen oder mehrere bildgebenden Sensoren, mit denen es eine Bildinformation, vorzugsweise ein Bild der entsprechenden Reinigungsmaschine erfassen kann. In dem in Fig. 3b dargestellten Ausführungsbeispiel erfasst ein Nutzer 40 beispielsweise über sein Nutzerendgerät 10 ein oder mehrere Bilder von dem Logo und anderen auf der Oberfläche der Reinigungsmaschine angeordneten textuellen Informationen. Über eine vorzugsweise drahtlose Verbindung zu einer Cloud 34 kann der Nutzer 40 mit seinem Nutzerendgerät 10 zudem auf einen Speicher 30 zugreifen, auf dem beispielsweise für verschiedene Seriennummern von Reinigungsmaschinen sowohl entsprechende Bildinformationen, als auch die jeweiligen Steuerinformationen hinterlegt sind, so dass anhand der erfassten Bildinformationen der Reinigungsmaschine eine, die Reinigungsmaschine vorzugsweise eindeutig definierende Information ermittelt werden kann, anhand der die Ermittlung der Steuerinformation erfolgen kann. Diese Auswahl kann entweder mit Hilfe eines über die Cloud 34 erreichbaren Programms bzw. mit Hilfe eines über die Cloud 34 erreichbaren Dienstes 32, oder über eine auf dem Nutzerendgerät 10 hinterlegte Applikation erfolgen. Über die Zuordnung einer Steuerinformation zu den Informationen zu einer Reinigungsmaschine ergibt sich die benötigte Steuerinformation, die sich ebenfalls auf dem Speicher 30 befindet und vorzugsweise über das Nutzerendgerät 10 an das Dosiergerät 10 übermittelt wird.

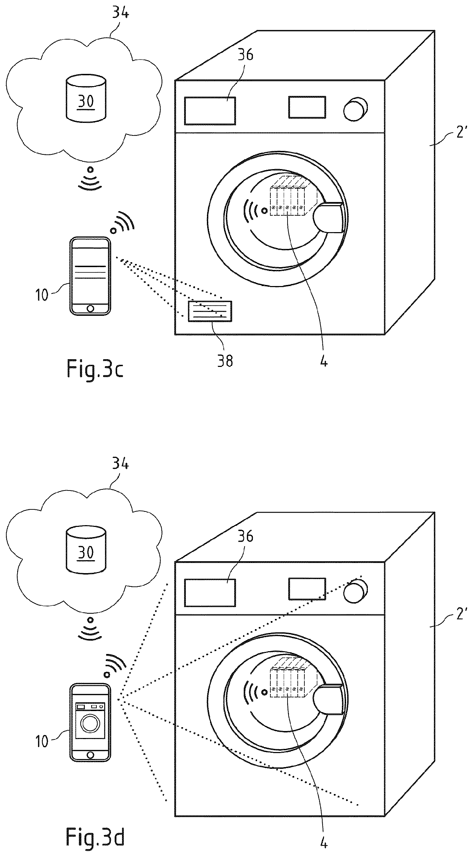

Fig. 3c zeigt ein drittes Ausführungsbeispiel eines mobilen Dosiergeräts, das nicht Teil der Erfindung ist, zur automatischen Dosierung von Reinigungsmitteln angeordnet in der Waschtrommel einer Waschmaschine und für einen Empfang von Steuerinformationen drahtlos mit einem Nutzerendgerät verbunden, bei dem anstatt einem oder mehrerer Bilder von dem Logo und anderen auf der Oberfläche der Reinigungsmaschine angeordneten textuellen Informationen, ein oder mehrere Bilder des Typenschildes der Reinigungsmaschine erfasst werden, so dass ähnlich wie in Fig. 3b beschrieben, anhand der erfassten Bildinformationen eine die Reinigungsmaschine vorzugsweise eindeutig definierende Information sowie daraus die Ermittlung der entsprechenden Steuerinformation erfolgen kann, bevor die Steuerinformation vorzugsweise über das Nutzerendgerät 10 an das Dosiergerät 10 übermittelt wird.

Da ein Typenschild einer Reinigungsmaschine in der Regel sehr viel mehr Text umfasst, als ein Logo einer Reinigungsmaschine, wird gemäß dem in Fig. 3c dargestellten Ausführungsbeispiel vorgeschlagen, dass die Bilder zur Auswertung mittels eines Texterkennungsalgorithmus zunächst in eine digitale Form überführt werden.

Fig. 3d zeigt ein viertes Ausführungsbeispiel eines mobilen Dosiergeräts, das nicht Teil der Erfindung ist, zur automatischen Dosierung von Reinigungsmitteln angeordnet in der Waschtrommel einer Waschmaschine und für einen Empfang von Steuerinformationen drahtlos mit einem Nutzerendgerät verbunden, bei dem anstatt einem oder mehrerer Bilder von dem Logo und anderen auf der Oberfläche des Behandlungsgeräts angeordneten textuellen Informationen, ein oder mehrere Bilder der frontalen Ansicht einer Reinigungsmaschine erfasst werden, so dass ähnlich wie in Fig. 3b und 3c beschrieben, anhand der erfassten Bildinformationen eine Information zu einer Reinigungsmaschine und daraus eine Steuerinformation ermittelt werden kann, bevor die Steuerinformation vorzugsweise über das Nutzerendgerät 10 an das Dosiergerät 10 übermittelt wird.

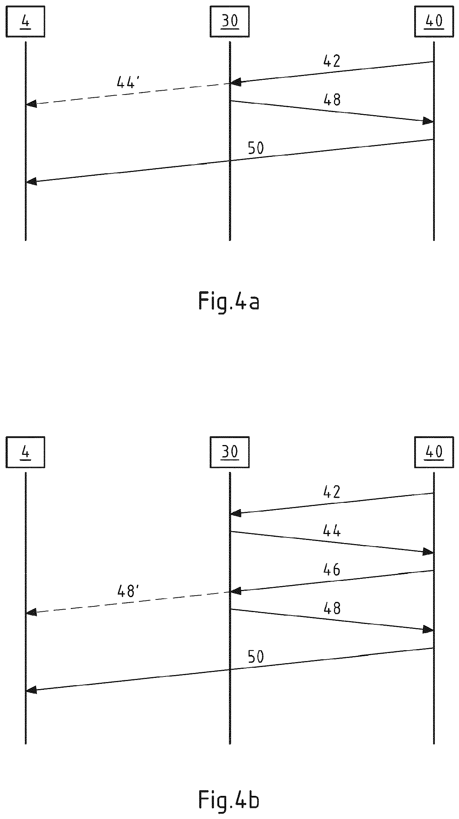

Fig. 4a zeigt ein Ablaufdiagramm zur Veranschaulichung eines beispielhaften Vorgangs zum Empfang von Steuerinformationen gemäß einem ersten Ausführungsbeispiel, bei dem ein Nutzer 40 zunächst über eine Nutzerschnittstelle eine mit Hilfe eines Nutzerendgeräts 10 erfasste Bildinformation an einen Speicher 30 versendet, auf dem diese Bildinformation zunächst abgelegt wird. Nach einer optionalen Authentifizierung des Nutzers 40, die vorzugsweise in die Anfrage 42 integriert ist, wird die Bildinformation von einem Programm bzw. von einem Dienst 32 ausgewertet, wobei während der Auswertung anhand der erfassten Bildinformation eine Information zu einer Reinigungsmaschine bestimmt wird, welche einer entsprechende Steuerinformation zugeordnet ist. Alternativ kann die Auswertung auch über eine Applikation des Nutzerendgeräts 10 erfolgen, die dazu nur auf die auf dem Speicher 30 hinterlegten Daten zugreifen muss.

Nach Ermittlung der Steuerinformation anhand der mit Hilfe eines Nutzerendgeräts 10 erfassten Bildinformation kann die ermittelte Steuerinformation nun in einem optionalen Schritt 44' entweder direkt drahtlos an das mobile Dosiergerät 4 versendet werden oder in dem Schritt 48 zunächst über das mobile Nutzerendgerät 10 an den Nutzer 40 versendet werden, welcher die Steuerinformation dann schließlich in dem Schritt 50 an das mobile Dosiergerät weiterleitet.

Fig. 4b zeigt ein Ablaufdiagramm zur Veranschaulichung eines beispielhaften Vorgangs zum Empfang von Steuerinformationen gemäß einem weiteren Ausführungsbeispiel, bei dem nach Übertragung einer mit Hilfe eines Nutzerendgeräts 10 erfassten Bildinformation an einen Speicher 30, von einem Programm bzw. Dienst 32 keine eindeutige Steuerinformation bestimmt werden kann. Ein Grund dafür kann beispielsweise sein, dass die von dem Nutzerendgerät 10 erfasste Bildinformation nicht eindeutig ist, so dass diese Bildinformation nicht zur Identifizierung einer einzigen Steuerinformation führt.

In einem solchen Fall können beispielsweise mehrere eine Reinigungsmaschine eindeutig definierende Informationen mit entsprechenden Steuerinformationen in Frage kommen, auf die die erfasste Bildinformation passt, so dass gemäß dem in Fig. 4b dargestellten Ausführungsbeispiel in Schritt 44 zunächst eine Anfrage an den Nutzer zur Auswahl verschiedener hinsichtlich der erfassten Bildinformation passender Informationen zu Reinigungsmaschinen gestellt wird, aus der der Nutzer 40 dann vorzugsweise die passende Information auswählt und diese Information in Schritt 46 an die Speichereinheit versendet.

Die der ausgewählten Information zu einer Reinigungsmaschine zugehörige Steuerinformation wird schließlich entweder direkt von dem Speicher 30 in Schritt 48`oder indirekt in den Schritten 48 und 50 mittels des Nutzerendgeräts versendet.

Alternativ zu dem hier vorgeschlagenen Vorgang können auch universelle Steuerinformationen auf dem Speicher 30 hinterlegt sein, die in dem Fall übertragen werden, in dem eine entsprechende Information zu einer Reinigungsmaschine anhand einer erfassten Bildinformation nicht oder nicht eindeutig identifiziert werden kann.

Zudem muss auf dem Speicher 30 nicht notwendigerweise für jede Information zu einer Reinigungsmaschine eine eigene Steuerinformationen hinterlegt sein, es können auch für verschiedene Typen dieselben Steuerinformationen hinterlegt sein.

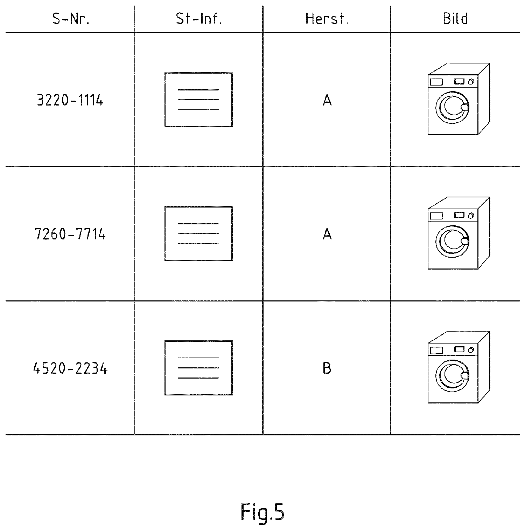

Fig. 5 zeigt ein Beispiel einer gemäß Fig. 4b in Schritt 44 an ein Nutzerendgerät übermittelten Anfrage in Form einer Tabelle zur Auswahl der entsprechenden Information zu einer Reinigungsmaschine durch einen Nutzer. In der von dem Speicher 30 an den Nutzer 40 übertragenen Tabelle sind neben einer hier als Seriennummer gebildeten Information zu einer Reinigungsmaschine entsprechende Steuerinformationen sowie eine Herstellerangabe und eine Frontaldarstellung der entsprechenden Reinigungsmaschine aufgeführt, die es einem Nutzer ermöglichen sollen, die Informationen zu seiner Reinigungsmaschine sowie die entsprechenden Steuerinformationen eindeutig auszuwählen.

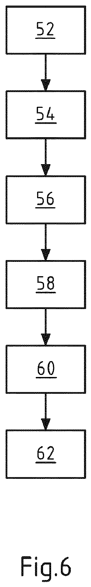

Fig. 6 zeigt ein Fließdiagramm zur Veranschaulichung eines beispielhaften Ablaufs einer sensorbasierten automatischen Erkennung, ab der Erfassung einer Bildinformation, bis hin zur Auswahl einer Steuerinformation.

Die in Schritt 52 durchgeführte Erfassung einer Bildinformation erfolgt hierbei vorzugsweise mit Hilfe eines Nutzerendgeräts 10, wie einem Smart Phone, einem Tablet, einer Smart Watch, einer Smart Cam, einem Computer oder dergleichen, wobei die Bildinformation ein oder mehrerer Bilder zumindest eines Teiles einer Reinigungsmaschine umfassen kann.

In einem auf die Erfassung der Bildinformation folgenden Schritt 54 kann eine optische Bearbeitung der erfassten Bildinformation erfolgen, in der beispielsweise die Farbwerte eines Bildes in Grauwerte überführt werden bzw. eine Binärisierung des Bildes in Schwarz-Weiß-Werte erfolgt. Alternativ können die Bilder auch in digitale Daten, beispielsweise RGB-Daten transformiert werden. Ferner kann im Rahmen einer optischen Bearbeitung auch eine Filterung oder Gruppierung von Bildobjekten anhand der Helligkeit bzw. der Größe erfolgen.

Nach einer optionalen Bearbeitung der Bildinformationen findet in Schritt 56 eine Reduktion der Bildobjekte statt, indem aus den vorhandenen Bildobjekten vorzugsweise nur Bildobjekte ausgewählt werden, die für eine spätere Identifikation einer Information zu einer Reinigungsmaschine relevant sein könnten.

In Schritt 58 erfolgt anschließend ein Vergleich mit auf einem Speicher 30 gespeicherten Bildinformationen. Hierbei ist auf dem Speicher 30 eine detaillierte Sammlung von Daten betreffend verschiedenste Reinigungsmaschinen hinterlegt, in der beispielsweise verschiedene Bilder, Grauwertbilder, Schwarz-Weiß-bilder, RGB-Datensätze und dergleichen für einzelne Reinigungsmaschinentypen hinterlegt sind anhand derer Vergleiche mit den erfassten Bildinformationen durchgeführt werden können.

In Schritt 60 wird schließlich eine Wahrscheinlichkeitsverteilung anhand der übereinstimmenden Merkmale erstellt, die ab einer bestimmten definierten Wahrscheinlichkeit zu einer eindeutigen Zuordnung der erfassten Bildinformation zu einem bestimmten Reinigungsmaschinentypen führt. Wird diese Mindestwahrscheinlichkeit an übereinstimmenden Merkmalen nicht erreicht, so wird in der schließlich in Schritt 62 zu treffenden Auswahl anhand von Informationen zu einer Reinigungsmaschine nicht nur eine mögliche Steuerinformation ausgewählt, sondern vorzugsweise eine Tabelle gemäß Fig. 5 an den Nutzer 40 übertragen, so dass dieser über die in der Tabelle aufgeführten Angaben eine endgültige Auswahl seines Reinigungsmaschinentyps und der mit dieser verbundenen Steuerinformationen treffen kann.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren zur Dosierung von Reinigungsmitteln in Reinigungsmaschinen mit einem mobilen Dosiergerät umfassend die Schritte:
- Empfangen von Steuerinformationen, wobei die Steuerinformationen abhängig von einer Information zu einer Reinigungsmaschine sind;
- Ermitteln des Fortschritts eines Reinigungsvorgangs; und
- Dosieren von Reinigungsmittel abhängig von den empfangenen Steuerinformationen und dem ermittelten Fortschritt des Reinigungsvorgangs;
- wobei die Information zu der Reinigungsmaschine über eine sensorbasierte automatische Erkennung ermittelbar ist,
**dadurch gekennzeichnet, dass**
die sensorbasierte automatische Erkennung der Information zu der Reinigungsmaschine die Erfassung eines Bildes zumindest eines Teils einer Reinigungsmaschine umfasst, wobei die Bildinformation von einem in einem Nutzerendgerät angeordneten Sensor optisch erfasst wird, und wobei der zumindest eine Teil der Reinigungsmaschine für eine Reinigungsmaschine spezifische Teile umfasst, so dass anhand dieser Informationen die Information zu der Reinigungsmaschine ermittelt wird, und dass nach Identifizierung der Information zu der Reinigungsmaschineanhand dieser die Steuerinformation ermittelt wird, welche zur anschließenden Parametrisierung des beweglichen Dosiergeräts verwendet wird.

2. Verfahren nach Anspruch 1,
**dadurch gekennzeichnet, dass**
die sensorbasierte automatische Erkennung die Bestimmung von Bildobjekten innerhalb eines erfassten Bildes umfasst.

3. Verfahren nach einem der vorangehenden Ansprüche,
**dadurch gekennzeichnet, dass**
die sensorbasierte automatische Erkennung eine Reduktion der bestimmten Bildobjekte umfasst, wobei die Reduktion der Bildobjekte vorzugsweise anhand ihrer Aussagekraft für die Ermittlung der Information zu einer Reinigungsmaschine erfolgt.

4. Verfahren nach einem der vorangehenden Ansprüche,
**dadurch gekennzeichnet, dass**
die sensorbasierte automatische Erkennung einen Algorithmus zur Texterkennung verwendet, wobei Ermittlung der Information zu einer Reinigungsmaschine vorzugsweise anhand eines innerhalb der erfassten Bildinformation angeordneten erkannten Textes erfolgt.

5. Verfahren nach einem der vorangehenden Ansprüche,
**dadurch gekennzeichnet, dass**
die sensorbasierte automatische Erkennung die optische Bearbeitung der erfassten Bildinformation umfasst, wobei die optische Bearbeitung vorzugsweise vor einer Bestimmung von Bildobjekten innerhalb der erfassten Bildinformation erfolgt.

6. Verfahren nach einem der vorangehenden Ansprüche,
**dadurch gekennzeichnet, dass**
die Steuerinformationen auf einem Speicher (30), vorzugsweise auf einem entfernt von dem Dosiergerät (4) angeordneten externen Speicher hinterlegt sind, von wo die ermittelten Steuerinformationen zum Empfang vorzugsweise direkt von dem Speicher auf das Dosiergerät übertragen werden.

7. Verfahren nach einem der vorangehenden Ansprüche,
**dadurch gekennzeichnet, dass**
nach Empfang der Steuerinformationen ein Abgleich von real ermittelten Daten mit für die entsprechenden Steuerinformationen auf dem Speicher hinterlegten Daten erfolgt.

8. Verfahren nach einem der vorangehenden Ansprüche,
**dadurch gekennzeichnet, dass**
anhand während eines Reinigungsvorgangs erfassten Messgrößen und der empfangenen Steuerinformationen ein Nutzerprofil erstellt wird, das vorzugsweise auf einem an dem Dosiergerät angeordneten nicht flüchtigen Speicher gespeichert wird.

9. Verfahren nach einem der vorangehenden Ansprüche,
**dadurch gekennzeichnet, dass**
die während eines Reinigungsvorgangs erfassten Messgrößen und empfangenen Steuerinformationen mit Hilfe eines maschinellen Lernsystems analysiert und erweitert werden.

## Claims

1. A method for dosing cleaning agents in cleaning machines with a mobile dosing device, comprising the steps of:
- receiving control information, wherein the control information is dependent on information relating to a cleaning machine;
- determining the progress of a cleaning process; and
- dosing cleaning agent depending on the received control information and the determined progress of the cleaning process;
- wherein the information relating to the cleaning machine can be determined by means of sensor-based automatic recognition,
**characterized in that** the sensor-based automatic recognition of the information relating to the cleaning machine comprises capturing an image of at least one part of a cleaning machine, wherein the image information is optically captured by means of a sensor arranged in a user terminal, and wherein the at least one part of the cleaning machine comprises parts specific to a cleaning machine, so that the information relating to the cleaning machine is determined on the basis of this information, **and in that** after identifying the information relating to the cleaning machine, the control information is determined on the basis thereof, which control information is used for subsequent parameterization of the movable dosing device.

2. The method according to claim 1,
**characterized in that**
the sensor-based automatic recognition comprises detecting image objects within a captured image.

3. The method according to one of the preceding claims,
**characterized in that**
the sensor-based automatic recognition comprises a reduction of the detected image objects, wherein the image objects are preferably reduced on the basis of their significance for determining the information relating to a cleaning machine.

4. The method according to one of the preceding claims,
**characterized in that**
the sensor-based automatic recognition uses an algorithm for text recognition, wherein the information relating to a cleaning machine is preferably determined on the basis of recognized text arranged within the captured image information.

5. The method according to one of the preceding claims,
**characterized in that**
the sensor-based automatic recognition comprises the optical processing of the captured image information, wherein the optical processing preferably takes place prior to detecting image objects within the captured image information.

6. The method according to one of the preceding claims,
**characterized in that**
the control information is stored in a memory (30), preferably in an external memory arranged remotely from the dosing device (4), from where the determined control information for reception is preferably transmitted directly from the memory to the dosing device.

7. The method according to one of the preceding claims,
**characterized in that**
after receiving the control information, actually determined data are compared with data stored in the memory for the corresponding control information.

8. The method according to one of the preceding claims,
**characterized in that**
a user profile, which is preferably stored on a non-volatile memory arranged on the dosing device, is created on the basis of measured variables detected during a cleaning process and the received control information.

9. The method according to one of the preceding claims,
**characterized in that**
the measured variables detected during a cleaning process and the received control information are analyzed and expanded using a machine learning system.

## Revendications

1. Procédé permettant le dosage d'agents de nettoyage dans des machines de nettoyage avec un appareil de dosage mobile, comprenant les étapes consistant à :
- recevoir des informations de commande, dans lequel les informations de commande dépendent d'une information concernant une machine de nettoyage ;
- déterminer l'avancement d'un processus de nettoyage ; et
- doser l'agent de nettoyage en fonction des informations de commande reçues et de l'avancement déterminé du processus de nettoyage ;
- dans lequel l'information concernant la machine de nettoyage peut être déterminée par l'intermédiaire d'une reconnaissance automatique basée sur un capteur,
**caractérisé en ce que** la reconnaissance automatique basée sur un capteur de l'information concernant la machine de nettoyage comprend la détection d'une image d'au moins une partie d'une machine de nettoyage, dans lequel l'information d'image est détectée optiquement par un capteur disposé dans un terminal utilisateur, et dans lequel l'au moins une partie de la machine de nettoyage comprend des parties spécifiques à une machine de nettoyage, de sorte que, à l'aide desdites informations, l'information concernant la machine de nettoyage est déterminée, **et en ce que**, après l'identification de l'information concernant la machine de nettoyage, l'information de commande est déterminée à l'aide de celle-ci, laquelle information de commande est utilisée pour le paramétrage subséquent de l'appareil de dosage mobile.

2. Procédé selon la revendication 1,
**caractérisé en ce que**
la reconnaissance automatique basée sur un capteur comprend la définition d'objets d'image dans une image détectée.

3. Procédé selon l'une des revendications précédentes,
**caractérisé en ce que**
la reconnaissance automatique basée sur un capteur comprend une réduction des objets d'image définis, dans lequel la réduction des objets d'image est effectuée de préférence à l'aide de leur pertinence pour la détermination de l'information concernant une machine de nettoyage.

4. Procédé selon l'une des revendications précédentes,
**caractérisé en ce que**
la reconnaissance automatique basée sur un capteur utilise un algorithme pour la reconnaissance de texte, dans lequel la détermination de l'information concernant une machine de nettoyage est effectuée de préférence à l'aide d'un texte reconnu disposé dans l'information d'image détectée.

5. Procédé selon l'une des revendications précédentes,
**caractérisé en ce que**
la reconnaissance automatique basée sur un capteur comprend le traitement optique de l'information d'image détectée, dans lequel le traitement optique est effectué de préférence avant une définition d'objets d'image dans l'information d'image détectée.

6. Procédé selon l'une des revendications précédentes,
**caractérisé en ce que**
les informations de commande sont stockées sur une mémoire (30), de préférence sur une mémoire externe disposée à distance de l'appareil de dosage (4), depuis laquelle les informations de commande déterminées sont transmises de préférence directement depuis la mémoire à l'appareil de dosage pour leur réception.

7. Procédé selon l'une des revendications précédentes,
**caractérisé en ce que**
après la réception des informations de commande, une comparaison de données réelles déterminées avec des données stockées sur la mémoire pour les informations de commande correspondantes est effectuée.

8. Procédé selon l'une des revendications précédentes,
**caractérisé en ce que**
à l'aide de grandeurs de mesure détectées pendant un processus de nettoyage et des informations de commande reçues, un profil utilisateur est établi, lequel est mémorisé de préférence sur une mémoire non volatile disposée au niveau de l'appareil de dosage.

9. Procédé selon l'une des revendications précédentes,
**caractérisé en ce que**
les grandeurs de mesure détectées pendant un processus de nettoyage et les informations de commande reçues sont analysées et développées à l'aide d'un système d'apprentissage automatique.
